# EUROPÄISCHE PATENTSCHRIFT

(11) **EP 3 898 345 B1**
(45) Veröffentlichungstag und Bekanntmachung des Hinweises auf die Patenterteilung: **23.11.2022**
(21) Anmeldenummer: 19829505.7
(22) Anmeldetag: 17.12.2019
(51) Int. Cl.: B60S 1/06, B60S 1/04, B60S 1/56

(54) **WISCHEINRICHTUNG ZUM REINIGEN EINES SENSORSICHTFELD AN EINER WINDSCHUTZSCHEIBE**
WIPER DEVICE FOR CLEANING A SENSOR FIELD OF VISION ON A WINDSHIELD
DISPOSITIF D'ESSUYAGE POUR LE NETTOYAGE D'UN CHAMP OPTIQUE DE CAPTEUR SUR UN PARE-BRISE

(30) Priorität: 18.12.2018 DE 102018132632
(43) Veröffentlichungstag der Anmeldung: 27.10.2021
(73) Patentinhaber: Bombardier Transportation GmbH, 10785 Berlin (DE)
(72) Erfinder: FEL, Landri, 1210 Wien (AT)
(74) Vertreter: Zimmermann & Partner Patentanwälte mbB
(86) Internationale Anmeldenummer: PCT/EP2019/085743
(87) Internationale Veröffentlichungsnummer: WO 2020/127337

(56) Entgegenhaltungen:
- WO-A1-2018/150428
- DE-A1-102015 226 556
- US-A1- 2015 090 291

## Beschreibung

### Technisches Gebiet

Die vorliegende Erfindung betrifft eine Wischeinrichtung für ein Fahrzeug, ein System für eine Frontpartie eines Fahrzeugs und ein Fahrzeug. Insbesondere behandelt die Erfindung konstruktive Möglichkeiten, um ein Sensorsichtfeld in einer Windschutzscheibe eines Fahrzeugs reinigen zu können.

### Vorbekannter Stand der Technik

Allgemein sind Fahrzeuge zum Transport von Fahrgästen und oder Gütern bekannt, beispielsweise ausgebildet als Fahrzeug des öffentlichen Nahverkehrs, insbesondere als Straßenbahn, U-Bahn, S-Bahn, Omnibus, etc., als Kfz, Lkw und/oder Güterzug.

Solche Fahrzeuge sind zum Teil mit optischen Sensoren ausgestattet, welche dazu verwendet werden können, das Fahrzeug zu steuern und/oder den Betrieb des Fahrzeugs zu überwachen.

Aus dem US-Patent 3,644,956 ist eine Lokomotive bekannt, wobei eine Windschutzscheibe mittels zweier Wischblätter von Wasser und/oder Schmutz befreit werden kann. Die Wischblätter können mithilfe eines reziproken Getriebes in einer Querrichtung über jeweils einen Abschnitt der Windschutzscheibe gestrichen werden.

Die US-Patentanmeldung US 2002/0139394 A1 offenbart eine Vorrichtung zum Schutz einer Linse einer Kamera, wobei diese in einem Gehäuse mit einem Fenster verbaut ist. Um die Funktion der Kamera gewährleisten zu können, ist das Gehäuse mit einer Fensterwischanlage ausgerüstet, wobei das Fenster unter Beaufschlagung mit einem Wischelement rotieren kann. Dadurch wird Schmutz und Wasser zufriedenstellend von dem Fenster entfernt.

Aus der WO 2018 / 150 428 A1 ist eine Wischeinrichtung zum Reinigen eines Sichtfelds einer Kamera an einer Windschutzscheibe eines Fahrzeugs bekannt, aufweisend ein Wischelement und einen Träger. Weitere Wischeinrichtungen sind aus der US 2015 / 090291 A1 und DE 10 2015 226556 A1 bekannt.

### Nachteile des Stands der Technik

Die bisher bekannten technischen Lösungen und Ausführungsformen sind jedoch entweder sehr komplex aufgebaut, gestatten keine effiziente Energienutzung Raumnutzung und/oder sind anfällig gegen Ausfall.

### Problemstellung

Aufgabe der vorliegenden Erfindung ist es daher, eine Wischeinrichtung, ein System mit einer Wischeinrichtung und ein Fahrzeug mit einem solchen System bereitzustellen, wobei die genannten Gegenstände ausfallsicher sind, eine einfache Konstruktion aufweisen und gleichzeitig die Nachteile des Stands derTechnik zu verhindern oder zumindest zu mindern vermögen.

### Erfindungsgemäße Lösung

Die obige Aufgabe wird durch eine Wischeinrichtung nach Anspruch 1, ein System für eine Frontpartie eines Fahrzeugs gemäß Anspruch 12 und durch ein Fahrzeug gemäß Anspruch 15 gelöst. Weitere Ausführungsformen der genannten Gegenstände ergeben sich aus den abhängigen Unteransprüchen und/oder aus den zusätzlich diskutierten Ausführungsformen.

Gemäß der Erfindung dient die Wischeinrichtung zum Reinigen eines Sensorsichtfelds einer Windschutzscheibe, welche im Bereich einer Frontpartie eines Fahrzeugs angeordnet ist. Eine Windschutzscheibe eines Fahrzeugs dient primär dazu, dass einer Person im Fahrzeug, zum Beispiel einem Fahrer, den Blick nach außen zu ermöglichen. Entsprechend kann ein Abschnitt der Windschutzscheibe als Hauptsichtfeld bezeichnet werden, wobei dieses derart gestaltet oder definiert ist, sodass ein Fahrer im Innenraum des Fahrzeugs alle relevanten Umgebungsdetails durch dieses Hauptsichtfeld erkennen kann.

Weiterhin kann hinter der Windschutzscheibe im Inneren des Fahrzeugs ein optischer Sensor montiert sein, dessen Strahlengang durch das Sensorsichtfeld der Windschutzscheibe verläuft, beispielsweise um eine Fahrzeugumgebung zu überwachen. Gemäß einer Ausgestaltung ist das Sensorsichtfeld außerhalb des Hauptsichtfelds der Windschutzscheibe vorgesehen, sodass eine Sicht des Fahrers durch das Hauptsichtfeld nicht durch den zum Sensorsichtfeld gehörigen optischen Sensor obstruiert ist. Die Anordnung des Sensorsichtfelds außerhalb des Hauptsichtfelds inkludiert, dass sich beide Felder bis zu 20 %, bevorzugt bis zu 10 %, besonders bevorzugt bis zu 5 % der Größe des Sensorsichtfelds überschneiden. Das Sensorsichtfeld kann entweder vorgegeben sein und/oder sich durch ein Sichtfeld des dazugehörigen optischen Sensors definieren.

Erfindungsgemäß weist die Wischeinrichtung dabei ein Wischelement und einen Träger auf, wobei der Träger dazu ausgebildet ist und/oder mit entsprechenden Befestigungsmitteln versehen ist, um an der Windschutzscheibe oder in unmittelbarer Nähe der Windschutzscheibe befestigt werden zu können. Beispielsweise kann der Träger insbesondere durch Reibschluss oder Stoffschluss direkt auf der Windschutzscheibe befestigt werden. Weiterhin kann der Träger mit einer Vorrichtung zur Bereitstellung eines Unterdrucks zwischen Träger und der Windschutzscheibe und/oder mit einer klebenden Fläche versehen werden, sodass eine ansaugende Normalkraft bzw. ein haftender Stofffluss zwischen Träger und der Windschutzscheibe erzeugt wird. Unter den Umfang der Erfindung fällt es auch, wenn der Träger so ausgebildet ist, sodass er zum Beispiel im Randoder Rahmenbereich der Windschutzscheibe innerhalb oder außerhalb des Fahrzeugs bzw. der Frontpartie des Fahrzeugs befestigt werden kann.

Das Wischelement ist beweglich an dem Träger gelagert. Dabei ist/sind der Träger, das Wischelement und/oder zwischen Träger und Wischelement wirksame Lagerelemente so gestaltet, dass das Wischelement relativ zum Träger mindestens eine stabile Halteposition einnehmen kann, und wobei das Wischelement mindestens durch Überwinden einer definierten Haltekraft aus der stabilen Halteposition gebracht werden kann.

Der Träger der Wischeinrichtung für das Sensorsichtfeld ist so ausgebildet, sodass diese in unmittelbarer Umgebung des Sensorsichtfelds montiert werden kann, jedoch das Sensorsichtfeld im Wesentlichen nicht überdeckt.

Weiterhin kann das Wischelement verschiebbar, schwenk- und/oder drehbar an dem Träger gelagert sein. Insbesondere kann das Wischelement vollständig rotierbar an dem Träger vorgesehen sein, sodass eine vollständige 360°-Rotation des Wischelements um den Träger zu einer kreisförmig gereinigten Fläche des Sensorsichtfelds führt.

Alternativ ist denkbar, dass das Wischelement teil-drehbar an dem Träger gelagert ist, sodass das Wischelement eine Schwenkbewegung zur Reinigung des Sensorsichtfelds auf der Windschutzscheibe vollführen kann.

Weiterhin ist die Lagerung des Wischelements an dem Träger so gewählt, sodass das Wischelement stets bestrebt ist, mindestens eine bestimmte, bevorzugt eine erste oder eine zweite bestimmte Haltepositionen bezüglich des Trägers einzunehmen. Dadurch wird erreicht, dass das Wischelement keine unerwünschten Bewegungen vollzieht, beispielsweise verursacht durch eine Bewegung des Fahrzeugs (Bodenwelle) oder durch Strömungskräfte. Grundsätzlich könnte gesagt werden, dass das in einer Halteposition befindliche Wischelement stabil, relativ fest angeordnet und statisch bestimmt ist.

Außerdem sind Träger und Wischelement und/oder eine dazwischen wirksame Lagerung so gestaltet, dass das Wischelement mit einer definierten Haltekraft in der stabilen Halteposition gehalten wird. Soll das Wischelement aus der stabilen Halteposition herausbewegt werden, so ist ein Krafteintrag, vorzugsweise auf das Wischelement, notwendig, welcher größer als die stabile Haltekraft ist.

Auf diese Weise wird erstmalig erreicht, dass eine gesonderte Wischeinrichtung auf einer Windschutzscheibe eines Fahrzeugs angeordnet werden kann, wobei diese Wischeinrichtung ausschließlich zum Reinigen eines Sensorfelds der Windschutzscheibe vorgesehen ist.

Die Lagerung des Wischelements auf dem Träger ist so gestaltet und/oder mit solchen Lagerungsmitteln versehen, so dass das Wischelement bei bestimmungsgemäßer Befestigung des Trägers an der Windschutzscheibe oder in unmittelbarer Nähe der Windschutzscheibe durch eine Wischbewegung eines Wischerblatts einer Scheibenwischeinrichtung des Hauptsichtfeld der Windschutzscheibe aus der stabilen Halteposition gebracht werden kann. Folglich ermöglicht eine solche Anordnung, dass das Wischelement bei bestimmungsgemäßer Befestigung an der Windschutzscheibe durch das Wischerblatt der Scheibenwischeinrichtung angetrieben und/oder betätigt wird.

Gemäß einer Ausführungsform wird eine Wischeinrichtung bereitgestellt, wobei keine gesonderte Betätigungsvorrichtung und/oder Antriebsvorrichtung zum Antrieb und/oder zur Betätigung des Wischelements erforderlich ist, sondern insbesondere eine dritte, bereits genutzte Komponente zu diesem Zweck verwendet wird. Die Energie zur Betätigung des Wischelements entstammt im Wesentlichen ausschließlich der Scheibenwischeinrichtung des Hauptsichtfelds, insbesondere der kinetischen Energie des Wischerblatts der Scheibenwischeinrichtung. Die Wischeinrichtung weist somit keine eigenständigen, zum Beispiel manuelle, Antriebsmittel und/oder keine elektrische Energie verbrauchenden Antriebsmittel zum Betätigen des Wischelements auf.

Im Kontext der Erfindung wird offenbart, dass das Wischelement derart beweglich an dem Träger gelagert ist, so dass das Wischelement, und insbesondere ein mit dem Wischelement kinematisch assoziiertes, weiteres Element, zum Beispiel ein das Wischelement tragender Wischerarm, in einer Halteposition, insbesondere vollständig, außerhalb des Sensorsichtfelds angeordnet ist. Dies hat zur Folge, dass das Sensorsichtfeld nicht durch das Wischelement oder eine weitere dazugehörige Komponente abgedeckt ist, wenn sich das Wischelement in einer Halteposition befindet. Dadurch wird ein Strahlengang eines dem Sensorsichtfeld zugeordneten optischen Sensors nicht durch das Wischelement, und insbesondere durch ein mit dem Wischelement kinematisch assoziiertes weiteres Element, obstruiert.

Gemäß einer weiteren Ausführungsform ist das Wischelement derart beweglich an dem Träger gelagert, insbesondere sind dazu geeignete Lagermittel zwischen Träger und Wischelement vorgesehen, sodass das Wischelement eine stabile erste Halteposition und eine stabile zweite Halteposition einnehmen kann. Um das Wischelement aus einer dieser Haltepositionen heraus zu bewegen, muss eine in der jeweiligen Halteposition wirksame erste bzw. zweite Haltekraft überwunden werden.

Entsprechend einer Ausgestaltung ist der Träger mit einem Rotationslager versehen, sodass das Wischelement zwischen der ersten Halteposition und der zweiten Position hin- und hergeschwenkt werden kann. Insbesondere ist dabei das Wischelement derart beweglich an dem Träger gelagert, bzw. entsprechende Lager- und/oder Spannmittel sind wirksam zwischen Träger und Wischelement vorgesehen, sodass das Wischelement sich stets in die stabile erste Halteposition oder in die stabile zweite Halteposition bewegt. Entsprechend befindet sich das Wischelement - insbesondere bei Nicht-Betätigung durch das Wischerblatt der Scheibenwischeinrichtung, also in Ruhelage - stets in der stabilen ersten Halteposition oder in der stabilen zweiten Halteposition.

Folglich ist die Wischeinrichtung für das Sensorfeld geeignet, einen Kreissegment-ähnlichen Bereich der Windschutzscheibe zu reinigen. Dabei befindet sich das Wischelement stets in einer definierten Position. Eine solch stabile Position wird nur verlassen, wenn das Wischelement durch ein Wischerblatt der Scheibenwischeranlage zwischen der stabilen ersten Halteposition und der stabilen zweiten Position hin und her bewegt wird

Gemäß einer weiteren Ausführungsform kann ein erster Anschlag und ein zweiter Anschlag vorgesehen sein, wobei diese Anschläge geeignet sind, eine (Schwenk)-Bewegung des Wischelements im Hinblick auf die erste Halteposition und die zweite Halteposition zu beschränken.

Gemäß einer Weiterentwicklung der Erfindung, ist die Wischeinrichtung mit flexiblen Elementen versehen, die so angeordnet sind, sodass eine Kollision des Wischerblatts der Scheibenwischeinrichtung mit dem Wischelement der Wischeinrichtung abgefedert und/oder gedämpft wird. Auf diese Weise werden mechanische Belastungen der Komponenten reduziert, wodurch die Lebensdauer verlängert wird. Denn für jeden einzelnen Wischvorgang der Wischeinrichtung ist eine initiale Betätigung des Wischelements durch das Wischerblatt erforderlich. Dadurch wird bedingt, dass zwischen Wischelement und Wischerblatt eine hohe Anzahl von Betätigungs-Kollisionen stattfindet, deren Auswirkung durch die beschriebene Weiterentwicklung gemildert werden.

Gemäß einer Weiterentwicklung der Erfindung wird offenbart, dass Vorspannmittel und/oder Haltemittel vorgesehen sind, die eine entsprechende Haltekraft zwischen dem Wischelement und einem Anschlag bereitstellen und so das Wischelement in einer stabilen Halteposition halten.

Solche Vorspannmittel können zum Beispiel derart zwischen dem Träger und dem Wischelement angeordnet sein, sodass das Vorspannmittel das Wischelement stets entweder in die stabile erste Halteposition oder in die stabile zweite Halteposition bewegt. Insbesondere ist das Wischelement zwischen den stabilen Haltepositionen ausschließlich in instabilen Mittelpositionen. Entsprechend strebt das Wischelement in einer instabilen Mittelposition stets eine der stabilen Halteposition an.

Insbesondere wird in diesem Zusammenhang offenbart, dass ein mit dem Wischelement kinematisch assoziiertes weiteres Element verhältnismäßig flexibel ausgeführt ist. Denn dieses weitere Element dient dazu mit dem Wischerblatt zur Betätigung des Wischelements durch Kollision in Kontakt zu treten, wobei die Flexibilität des weiteren Elements ermöglicht, dass das Wischerblatt an dem Wischelement vorbei streichen kann, indem das Wischerblatt das weitere Element entsprechend verformt. Das weitere Element kann dabei gegebenenfalls integral mit dem Wischelement oder als mit dem Wischelement verbundenes, gesondertes Bauteil gestaltet sein.

Die genannten Haltemittel können so ausgebildet und angeordnet sein, sodass diese das Wischelement in der stabilen ersten oder zweiten Position halten und/oder den ersten und/oder zweiten Anschlag bilden. Gemäß einer Ausgestaltung können die Haltemittel zumindest teilweise als Magnete, insbesondere mit einem Federelement ausgebildet sein, wobei jeweils mindestens ein Magnet mittels mindestens einem Federelement an einem Anschlag und/oder an dem Wischelement angeordnet ist. Insbesondere kann dabei eine magnetische Kraft zwischen einem Anschlag und dem Wischelement erzeugt werden, welche somit als Haltekraft zum Halten des Wischelements in einer Halteposition dient.

Indem nun gemäß einer spezifischen Ausgestaltung ein Magnet mittels Feder an einem Anschlag und/oder an dem Wischelement befestigt ist, so kann eine Kollision zwischen dem Wischerblatt und dem Wischelement zu einer Kraft führen, die die magnetische Haltekraft überschreitet. Entsprechend wird eine Wischbewegung des Wischelements ausgelöst. Die Verwendung von Federn bewirkt dabei, dass das Loslösen des Wischelements aus der Halteposition immer bei einem bestimmten Kraftniveau erfolgt.

Insbesondere wird zur voranstehenden Ausführungsform dargelegt, dass ein mit dem Wischelement kinematisch assoziiertes weiteres Element verhältnismäßig steif ausgeführt ist. Denn dieses weitere Element dient dazu mit dem Wischerblatt zur Betätigung des Wischelements durch Kollision in Kontakt zu treten, wobei ein Vorbeistreichen des Wischerblatts am Wischelement dadurch ermöglicht wird, dass Wischelement aufgrund der Verwendung von Magnete und Federelementen von dem Wischerblatt aus dem Weg geschoben werden kann.

Im Kontext der Erfindung wird weiterhin ein System für eine Frontpartie eines Fahrzeugs offenbart. Eine solche Frontpartie ist zumindest teilweise mit einer Windschutzscheibe verschlossen. Weiterhin weist die Windschutzscheibe ein Hauptsichtfeld auf, um einer Person eine Sicht aus einem Innenraum des Fahrzeugs zu ermöglichen, und weiterhin ein Sensorsichtfeld auf, um einem optischen Sensor einen Strahlungsgang durch die Windscheibe zu ermöglichen. Das System ist weiterhin mit einer Scheibenwischeinrichtung mit mindestens einem Wischerblatt zum Reinigen des Hauptsichtfelds ausgestattet. Darüber hinaus ist eine Wischeinrichtung zum Reinigen des Sensorsichtfelds gemäß einem oder mehrerer der voranstehenden Ausführungsbeispiele vorgesehen. Dabei ist eine solche Wischeinrichtung derart an der Windschutzscheibe oder in unmittelbarer Nähe der Windschutzscheibe am Fahrzeug befestigt, indem das Wischelement derart an dem Träger gelagert ist und wobei der Träger derart an der Windschutzscheibe oder in unmittelbarer Nähe dazu befestigt ist, sodass Folgendes bewirkt wird:

Das in einer Halteposition angeordnete Wischelement kann aus dieser Halteposition herausbewegt werden, indem das Wischerblatt der Scheibenwischeinrichtung des Fahrzeugs das Wischelement während einer Wischbewegung des Wischerblatts anstößt. Durch diese Kollision wird eine der Haltekraft entgegenwirkende Betätigungskraft in das Wischelement induziert, wobei sich das Wischelement bei Überschreitung der Haltekraft aus der stabilen Halteposition herausbewegt. So die Wischeinrichtung gemäß einer Ausführungsform mit zwei Haltepositionen und/oder Anschlägen ausgestattet ist, so bewirkt eine erste Kollision das Lösen des Wischelements aus der ersten Halteposition, wodurch das Wischelement das Sensorsichtfeld überstreicht und reinigt und sofort in die zweite Halteposition übergeht.

Aus dieser zweiten Halteposition kann sich das Wischelement dann lösen, wenn beispielsweise das ebenfalls schwenkende Wischerblatt während einer Zurückbewegung wieder mit dem Wischelement kollidiert und dieses zurück in die erste Halteposition bewegt. Entsprechend ist die Position der Wischeinrichtung auf der Windschutzscheibe und die Lagerung des Wischelements an dem Träger derart gewählt und ausgebildet, sodass mittels einer ersten Hin-Bewegung des Wischerblatts das Wischelement aus der ersten Halteposition herausbewegt wird und in die zweite Halteposition gebracht wird, und sodass in einer zweiten Zurück-Bewegung des Wischerblatts das Wischelement aus der zweiten Halteposition herausgebracht wird und in die erste Halteposition zurück bewegt wird.

Gemäß einer spezifischen Ausführungsform sind zwischen dem Wischelement und dem Wischerblatt flexible und/oder Stoß-dämpfende Kontaktmittel verbaut. Denkbar ist auch, das Wischelement flexibel und biegsam auszugestalten, sodass dieses bei einer Kollision mit dem Wischerblatt sich zuerst flexibel deformiert, und erst dann aus der jeweiligen Halteposition löst.

Alternativ oder zusätzlich kann die Flexibilität des Wischelements ermöglichen, sodass ein Wischerblatt der Scheibenwischeinrichtung nach einer Betätigung des Wischelements an diesem vorbei streichen kann, wobei trotzdem sichergestellt wird, dass das Wischelement wieder durch das zurückbewegende Wischerblatt getroffen und betätigt werden kann.

Weiterhin wird ein Fahrzeug mit einem System gemäß einem oder mehrerer der zuvor genannten Ausführungsbeispiele offenbart. Das Fahrzeug weist dabei eine Front mit einer Windschutzscheibe auf, wobei in einem Innenraum des Fahrzeugs ein optischer Sensor vorgesehen ist, dessen Sichtfeld durch das Sensorsichtfeld der Windschutzscheibe führt. Ein solches Fahrzeug kann ein Fahrzeug des öffentlichen Personenverkehrs, also zum Beispiel ein Bus, eine Straßenbahn, eine S-Bahn, eine U-Bahn, ein Nahverkehrszug oder ein Schnellzug sein.

Die Erfindung ermöglicht erstmalig, dass ein optischer Sensor ein separates Sensorsichtfeld mit einer speziell dafür vorgesehenen Wischeinrichtung in oder an einem Fahrzeug verwendet werden kann, wobei das Hauptsichtfeld der Windschutzscheibe nicht durch den optischen Sensor überdeckt wird. Gleichzeitig wird sichergestellt, dass ein Strahlengang des optischen Sensors durch die Windschutzscheibe, insbesondere durch das Sensorsichtfeld, im Wesentlichen zu jeder Zeit ohne Obstruktion ermöglicht wird. Besonders günstig zeigt sich dabei, dass die Wischeinrichtung über eine vorhandene Scheibenwischeinrichtung betätigt werden kann.

Gemäß einer Ausgestaltung wird ein System zum Nachrüsten von Fahrzeugen offenbart, wobei eine Wischeinrichtung gemäß einer oder mehrerer der zuvor genannten Ausführungsbeispiele bereitgestellt wird, und insbesondere diese zusätzlich über flexible, dämpfende und/oder einstellbare Kollisionselemente verfügt, sodass eine Betätigung des Wischelements durch ein Wischerblatt zu keinem Schaden an dem Wischerblatt führt. Insbesondere sind die Kollisionselemente derart einstellbar, sodass eine Geschwindigkeit des Wischelements der Wischeinrichtung auf eine Betätigungsgeschwindigkeit der Scheibenwischeinrichtung abstimmbar ist.

Die voranstehenden beschriebenen Ausführungsformen können beliebig, jedoch insbesondere aus Sicht des Fachmanns in sinnhafter Weise miteinander kombiniert werden. Beispielsweise können geeignete Kombinationen von magnetischen Halteelementen und Vorspannelementen an dem Wischelement und/oder an Anschlägen angeordnet sein, sodass das Wischelement besonders zuverlässig von einer Halteposition entfernt und/oder aus dem Sensorsichtfeld herausbewegt werden kann.

### Kurzbeschreibung der Figuren

Die beiliegende Zeichnung veranschaulicht eine Ausführungsform und dient zusammen mit der Beschreibung der Erläuterung der Prinzipien der Erfindung. Die Elemente der Zeichnung sind relativ zueinander und nicht notwendigerweise maßstabsgetreu.
Fig. 1 zeigt ein Fahrzeugs gemäß einer exemplarischen Ausführungsform als Schienenfahrzeugs,
Fig. 2 repräsentiert eine schematische Ansicht auf eine Front des Schienenfahrzeugs gemäß Fig. 1,
Fig. 3 eine erste Ausführungsform einer Wischeinrichtung in einer Seitenansicht,
Fig. 4 eine Frontalansicht der Wischeinrichtung gemäß Fig. 3,
Fig. 5 eine zweite Ausführungsform einer Wischeinrichtung in einer Seitenansicht,
Fig. 6 eine Ansicht von oben der Wischeinrichtung gemäß Fig. 5,
Fig. 7 bis Fig. 10 eine Frontalansicht auf eine Windschutzscheibe des Schienenfahrzeugs mit einer Wischeinrichtung gemäß der ersten Ausführungsform in unterschiedlichen Bewegungszuständen, und
Fig. 11 bis Fig. 14 eine Frontalansicht auf eine Windschutzscheibe des Schienenfahrzeugs mit einer Wischeinrichtung gemäß der zweiten Ausführungsform in unterschiedlichen Bewegungszuständen.

### Ausführungsbeispiele

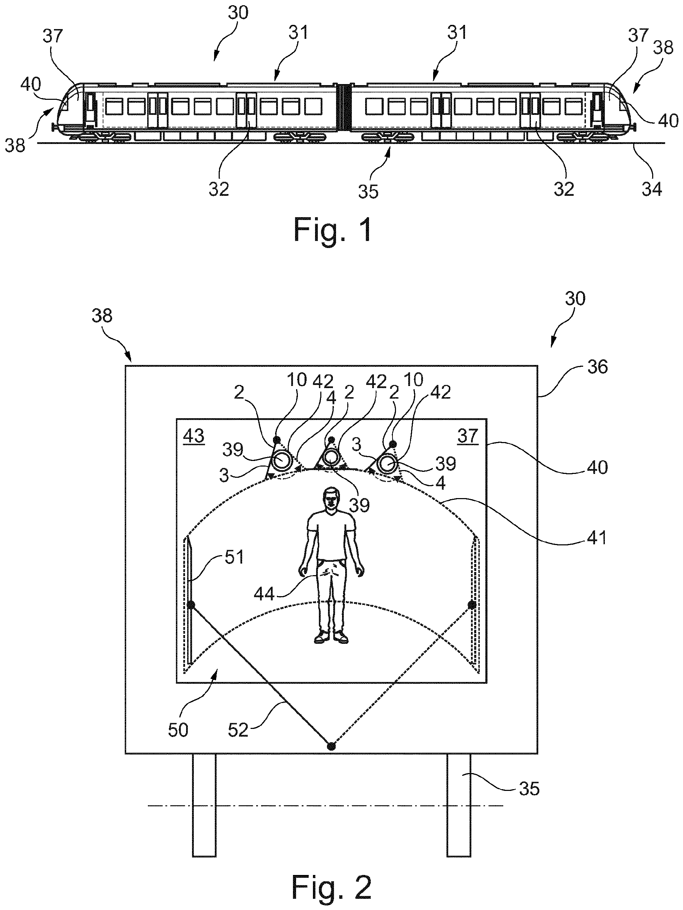

Zur Verdeutlichung des Gesamtverständnisses wird anhand Fig. 1 ein als Schienenfahrzeug ausgebildetes Fahrzeug 30 gezeigt. Dieses umfasst zwei Waggons 31 und zwei Wagenkästen 36, wobei der Zugang für Fahrgäste in einen Innenraum 43 des jeweiligen Wagenkastens 36 mithilfe einer Türvorrichtung 32 ermöglicht wird. Zudem ist das Fahrzeug 30 über mehrere Rollwerke 35 auf Schienen 34 gelagert.

Im Bereich von Frontpartien 38 an den Enden des Fahrzeugs 30 in einer Längsrichtung 33 ist jeweils eine Fahrerkabine 37 vorgesehen, wobei die Fahrerkabine mit einer Windschutzscheibe 40 verschlossen ist.

Fig. 2 ist eine schematische Darstellung einer Frontalansicht auf eine Frontpartie 38 des Fahrzeugs 30. Die Fahrerkabine 37 mit dem Innenraum 43 wird unter anderem durch den Wagenkasten 36 gebildet, wobei ein großer Teil einer Frontfläche der Frontpartie 38 von der Windschutzscheibe 40 eingenommen wird.

Um einem Fahrer 44 eine Durchsicht durch die Windschutzscheibe 40 zu ermöglichen, kann ein Hauptsichtfeld 41 der Windschutzscheibe 40 durch eine Scheibenwischeinrichtung 50 gereinigt und von Regenwasser befreit werden. Die Scheibenwischeinrichtung 50 weist mindestens ein Hebelwerk 52, ein an dem Hebewerk 52 angeordnetes Wischerblatt 51 und einen nicht gezeigten Antrieb auf. Dabei überstreicht das Wischerblatt 51 im Zuge einer Schwenkbewegung im Wesentlichen das für den Fahrer 44 relevante Hauptsichtfeld 41.

Oberhalb des Hauptsichtfelds 41 befinden sich mehrere Sensorsichtfelder 42 in der Windschutzscheibe 40, hinter welchen als Kamera 39 ausgebildete optische Sensoren entweder direkt an die Innenseite der Windschutzscheibe 40 oder im Innenraum 43 montiert sind.

Weiterhin sind auf einer Außenseite der Windschutzscheibe 40 für jedes Sensorsichtfeld 42 jeweils eine Wischeinrichtung 1 befestigt. Diese weist mindestens einen Träger 10 mit einem Rotationslager 11 auf, woran ein Wischelement 2 schwenkbar angebracht ist. Das Wischelement 2 kann dabei eine erste Halteposition 3 und eine zweite Halteposition 4 alternierend einnehmen, wobei das Wischelement 2 in einer solchen Position das Sensorsichtfeld 42 im Wesentlichen nicht verdeckt.

Weiterhin sind die Wischeinrichtungen 1 derart auf der Windschutzscheibe 40 positioniert und ausgerichtet, sodass das Wischerblatt 51 während einer Wischbewegung über das Hauptsichtfeld 41 das Wischelement 2 anstoßen und dadurch betätigen kann. Wird das Wischerblatt 51 von der linken Seite der Windschutzscheibe 40 nun auf die rechte Seite der Windschutzscheibe geschwenkt (Darstellung des Wischerblatts 51 mit unterbrochener Linie), so werden die Wischelement 2 der Wischeinrichtung in 1 aus der ersten Halteposition 3 in die zweite Halteposition 4 überführt, wodurch das Sensorsichtfeld 42 zusammen mit dem Hauptsichtfeld 41 von Schmutz und/oder Regenwasser befreit wird.

Die spezifische Ausgestaltung und ein kinematischer Zusammenhang zwischen einer Wischeinrichtung 1 und der Scheibenwischeinrichtung 50 des Fahrzeugs 30 wird anhand zweier Ausführungsformen der Wischeinrichtung 1 im Detail erläutert.

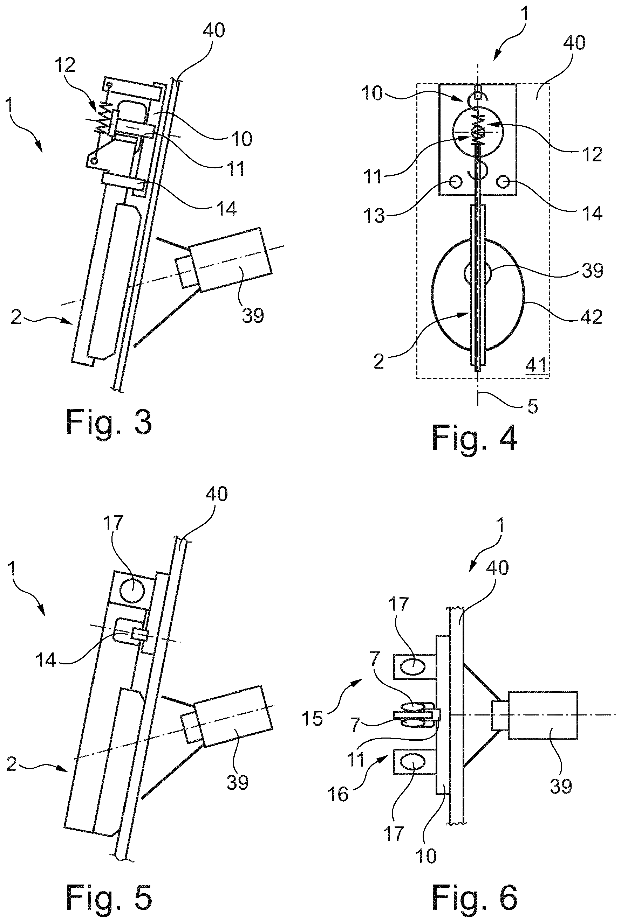

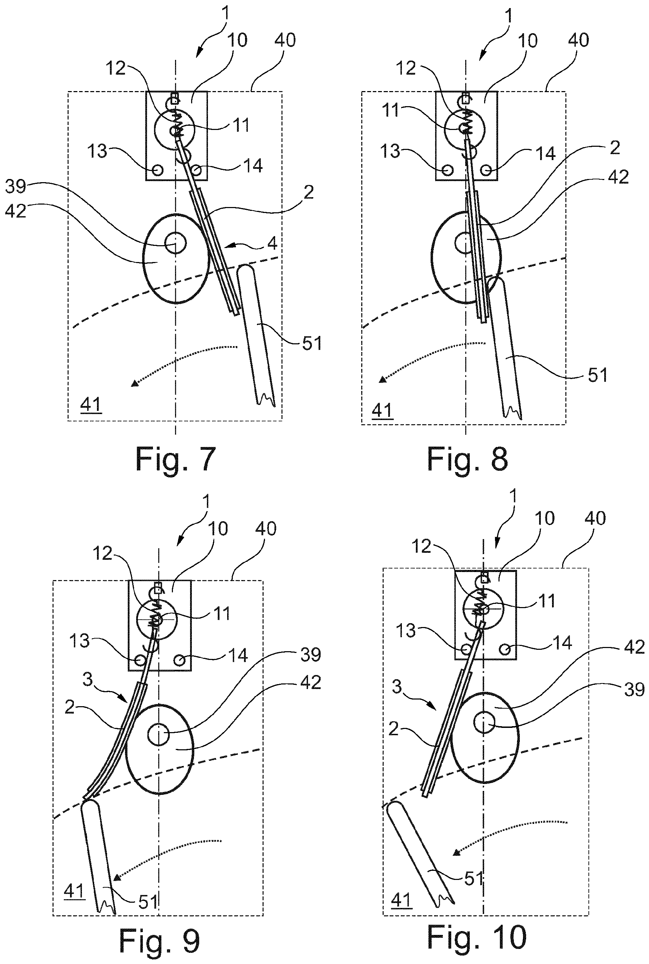

Mithilfe der Fig. 3, Fig. 4 und der Fig. 7 bis Fig. 10 wird ein erstes Ausführungsbeispiel der Wischeinrichtung 1 diskutiert. Fig. 3 zeigt die Wischeinrichtung 1 in einer schematischen Seitenansicht, und Fig. 4 in einer schematischen Frontalansicht, wohingegen die Fig. 7 bis Fig. 10 den Bewegungsablauf und vorteilhafte Ausführungen von Wischerblatt 51 und Wischeinrichtung 1 näher bringen soll.

Die Wischeinrichtung 1 weist dabei einen Träger 10 auf, der auf der Windschutzscheibe 40 geeignet angebracht ist, um das Sensorsichtfeld 42 im Wesentlichen vollständig mithilfe eines Wischelements 2 überstreichen und so reinigen zu können. Das Wischelement 2 ist auf dem Rotationslager 11 schwenkbar zwischen einer ersten Halteposition 3 und einer zweiten Halteposition 4 gelagert.

Die erste und zweite Halteposition 3 und 4 werden durch einen ersten Anschlag 13 und einen zweiten Anschlag 14 manifestiert, wobei Vorspannmittel 12 zusätzlich vorgesehen sind, um eine Haltekraft zwischen den Anschlägen 13 und 14 und dem Wischelement 2 zur Verfügung zu stellen. Dazu sind die als Feder ausgebildeten Vorspannmittel 12 auf einer Mittelachse 5 auf dem Träger 10 und an dem Wischelement 2 befestigt, sodass je nach Position des Wischelements 2 bezüglich der Mittelachse 5 eine Komponente der Vorspannkraft der Vorspannmittel 12 entweder zum ersten Anschlag 13 oder zum zweiten Anschlag 14 auf das Wischelement 2 wirkt. Auf diese Weise wird erreicht, dass das Wischelement 2 stets bestrebt sind, entweder in der ersten Halteposition 3 am ersten Anschlag 13 oder in der zweiten Halteposition am zweiten Anschlag 14 zu verweilen.

In Fig. 7 befindet sich das Wischelement 2 in der zweiten Halteposition 4, wobei die Vorspannmittel 12 das Wischelement 2 an den zweiten Anschlag 14 andrücken.

Überstreicht nun das Wischerblatt 51 die Windschutzscheibe 40 von rechts nach links (siehe Fig. 8 bis Fig. 10), so schiebt dieses das Wischelement 2 vom zweiten Anschlag 14 fort hin zum ersten Anschlag 13. Dabei überstreicht das Wischelement 2 vollständig das Sensorsichtfeld 42 und reinigt dieses.

In dem Moment, wenn das Wischelement 2 die Mittelachse 5 überschreitet, stellen die Vorspannmittel 5 eine Kraftkomponente zur Verfügung, welche das Wischelement 2 hin in die erste Halteposition 3 zum ersten Anschlag 13 zieht.

Fig. 9 verdeutlicht einen spezifischen Aspekt der ersten Ausführungsform. Das Wischelement 2 und/oder ein hier nicht gezeigtes, mit dem Wischelement 2 kinematisch assoziiertes, weiteres Element ermöglichen dem Wischerblatt 51, seinen Wischvorgang vollständig zu Ende zu führen in dem das Wischerblatt 51 unter dem Wischelement 2 hindurchstreichen und den Kontakt lösen kann. Dies wird dadurch ermöglicht, dass sich das Wischelement 2 und/oder das weitere Element zumindest abschnittsweise derart flexibel sind und verbiegen können, sodass das Wischerblatt 51 auf dem Weg von rechts nach links an dem Wischelement 2 vorbei streichen kann, und jedoch auf einem Rückweg von links nach rechts wiederum mit dem Wischelement 2 in Kontakt treten kann.

Auf diese Weise wird erreicht, dass die Wischeinrichtung 1 bei Betätigung durch das Wischerblatt 51 stets das vollständige Sensorsichtfeld 42 überstreicht, sich ansonsten verlässlich in einer der Haltepositionen 13 und 14 befindet und dabei das Sensorsichtfeld 42 nicht verdeckt. Weiterhin lässt sich so die Wisch-Bewegung des Wischelements 2 an eine Bewegung des Wischerblatts 51 angleichen, wobei dessen vollständige Schwenkbewegung nicht durch die Wischeinrichtung 1 negativ beeinflusst wird.

Die Fig. 5 und Fig. 6, und die Fig. 11 bis Fig. 14 beschreiben eine zweite Ausführungsform der Wischeinrichtung 1, wobei das Wischelement 2 schwenkbar über eine Rotationslager 11 auf dem Träger 10 befestigt sind.

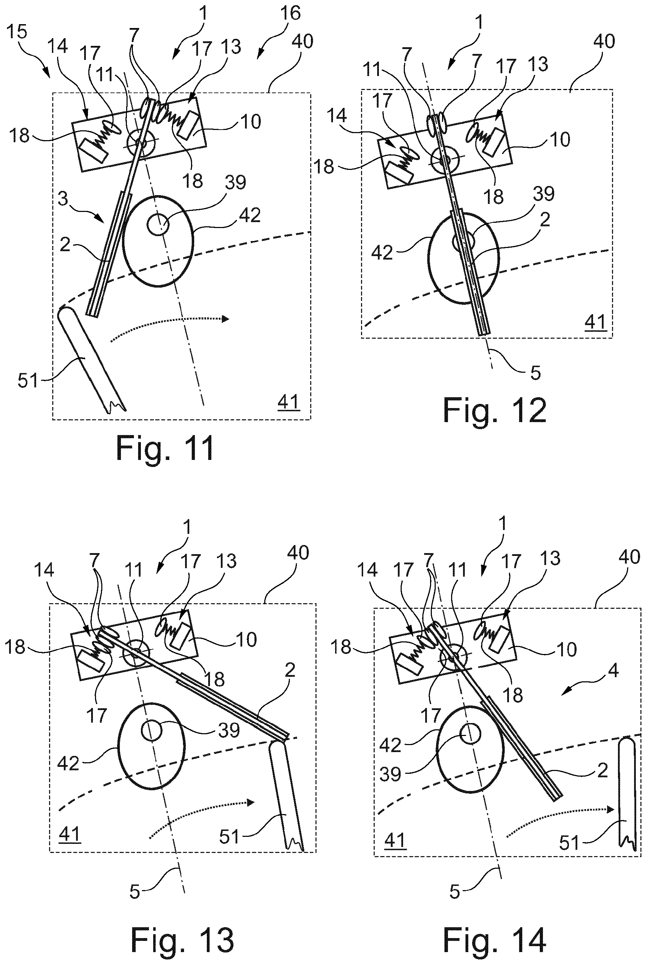

Die zweite Ausführungsform der Wischeinrichtung 1 unterscheidet sich von der ersten Ausführungsform der Wischeinrichtung 1 dadurch, dass in unterschiedlicher Weise dafür gesorgt wird, dass das Wischelement 2 sich stets in der ersten Halteposition 3 an dem ersten Anschlag 13, oder aber in der zweiten Halteposition 4 an dem zweiten Anschlag 14 einfindet. Dabei wird in alternativer Form ermöglicht, dass das Wischerblatt 51 an dem Wischelement 2 vorbei streichen kann, ohne dass das Wischelement 2 außerhalb eines Betätigungsbereichs des Wischerblatts 51 bleibt (wie fast in Fig. 13) und stets in dieses zurückkehrt.

Auf dem Träger 10 sind Magnete 17 über Federmittel 18 für jede Halteposition 3 und 4 vorgesehen, wobei die Magnete 17 mit weiteren Magneten 7 auf dem Wischelement 2 interagieren können.

In Fig. 11 befindet sich das Wischelement 2 in der ersten Halteposition 3 links vom Sensorsichtfeld 42, wobei das Wischerblatt 51 von links nach rechts bewegt und im Begriff ist mit dem Wischelement 2 zu kollidieren. Im Moment des anfänglichen Kontakts zwischen Wischerblatt 51 und Wischelement 2 zieht das Wischerblatt 51 das Wischelement 2 mit, wobei sich vorerst ein Kontakt der Magnete 17 und 7 nicht gelöst.

Erst wenn eine magnetische Haltekraft der Magnete 17 und 7 überwunden wird, überstreicht das Wischelement 2 das Sensorsichtfeld 41 (Fig. 12) und wird weit über dieses hinaus bewegt (Fig. 13). Dabei kompensieren linksseitige Federmittel 18 des Anschlags 14 diese übermäßige Auslenkung des Wischelements 2.

Sobald das Wischelement 2 und das Wischerblatt 51 außer Kontakt getreten sind schieben die Federmittel 18 das Wischelement 2 zurück an einen Rand des Sensorfelds 39 (Fig. 14). Von dort aus kann ein zurückkehrendes Wischerblatt 51 das Wischelement 2 wieder betätigen.

Wenngleich hierin spezifische Ausführungsformen dargestellt und beschrieben worden sind, liegt es im Rahmen der vorliegenden Erfindung, die gezeigte Ausführungsform geeignet zu modifizieren, ohne vom Schutzbereich der vorliegenden Erfindung abzuweichen. Beispielsweise kann die Gestalt der Anschläge 13 und 14 gemäß dem zweiten Ausführungsbeispiel, insbesondere die Verwendung von Magneten 17 und/oder von Federmittel 18 auch in geeigneter Weise auch in dem ersten Ausführungsbeispiel stattfinden.

### Bezugszeichenliste

- 1: Wischeinrichtung
- 2: Wischelement
- 3: erste Halteposition
- 4: zweite Halteposition
- 5: Mittelachse
- 7: Magnet
- 10: Träger
- 11: Rotationslager
- 12: Vorspannmittel
- 13: erster Anschlag
- 14: zweiter Anschlag
- 15: erste Haltemittel
- 16: zweite Haltemittel
- 17: Magnet
- 18: Federmittel
- 30: Fahrzeug
- 31: Waggon
- 32: Türvorrichtung
- 33: Längsrichtung
- 34: Schiene
- 35: Rollwerk
- 36: Wagenkasten
- 37: Fahrerkabine
- 38: Frontpartie
- 39: Kamera
- 40: Windschutzscheibe
- 41: Hauptsichtfeld
- 42: Sensorsichtfeld
- 43: Innenraum
- 44: Fahrer
- 50: Scheibenwischeinrichtung
- 51: Wischerblatt
- 52: Hebelwerk

## Patentansprüche

1. Wischeinrichtung (1) zum Reinigen eines Sensorsichtfelds (42) an einer Windschutzscheibe (40) für eine Frontpartie (38) eines Fahrzeugs (30), aufweisend
- ein Wischelement (2) und einen Träger (10),
- wobei der Träger (10) dazu ausgebildet ist und/oder mit entsprechenden Befestigungsmitteln versehen ist, um an der Windschutzscheibe (40) oder in unmittelbarer Nähe der Windschutzscheibe (40) befestigt zu werden,
**dadurch gekennzeichnet, dass**
- das Wischelement (2) derart beweglich an dem Träger (10) gelagert ist, so dass das Wischelement (2) relativ zum Träger (10) mindestens eine stabile Halteposition (3, 4) einnehmen kann und mindestens durch Überwinden einer definierten Haltekraft aus der stabilen Halteposition (3, 4) bringbar ist, und
- wobei das Wischelement (2) derart an dem Träger (10) gelagert ist und derart ausgebildet ist, so dass, bei bestimmungsgemäßer Befestigung des Trägers (10) an der Windschutzscheibe (40) oder in unmittelbarer Nähe der Windschutzscheibe (40), das Wischelement (2) durch eine Wischbewegung eines Wischerblatts (51) einer Scheibenwischeinrichtung (50) der Windschutzscheibe (40) aus der stabilen Halteposition (3, 4) bringbar ist und somit durch die Wischbewegung des Wischerblatts (51) antreibbar und/oder betätigbar ist.

2. Wischeinrichtung (1) nach Anspruch 1, wobei die Wischeinrichtung (1) keine eigenständigen Antriebsmittel und/oder keine elektrische Energie verbrauchenden Antriebsmittel zum Betätigen des Wischelements (2) aufweist.

3. Wischeinrichtung (1) nach Anspruch 1 oder 2, wobei das Wischelement (2) derart beweglich an dem Träger (10) gelagert ist, so dass das Wischelement (2), und insbesondere ein mit dem Wischelement (2) kinematisch assoziiertes, weiteres Element, in einer Halteposition (3, 4), insbesondere vollständig, außerhalb des Sensorsichtfelds (42) angeordnet ist.

4. Wischeinrichtung (1) nach einem der voranstehenden Ansprüche, wobei das Wischelement (2) derart beweglich an dem Träger (10) gelagert ist, so dass das Wischelement (2) relativ zum Träger (10) mindestens eine stabile erste Halteposition (3) und eine stabile zweite Halteposition (4) einnehmen kann, wobei das Wischelement (2) mindestens durch Überwinden einer definierten ersten Haltekraft aus der ersten Halteposition (3), und durch Überwinden einer definierten zweiten Haltekraft aus der zweiten Halteposition (4) bringbar ist.

5. Wischeinrichtung (1) nach Anspruch 4, wobei das Wischelement (2) derart beweglich an dem Träger (10) gelagert ist, sodass das Wischelement (2) stets bestrebt ist, entweder die erste Halteposition (3) oder die zweite Halteposition (4) einzunehmen, und insbesondere wobei das Wischelement (2) stets bestrebt ist, aus einer instabilen Mittelposition entweder in die erste Halteposition (3) oder in die zweite Halteposition (4) zu gelangen.

6. Wischeinrichtung (1) nach Anspruch 4 oder 5, wobei der Träger (10) ein Rotationslager (11) aufweist, mithilfe dessen das Wischelement (2) schwenkbar, insbesondere zwischen der ersten Halteposition (3) und der der zweiten Halteposition (4), an dem Träger (10) gelagert ist.

7. Wischeinrichtung (1) nach einem der voranstehenden Ansprüche, aufweisend mindestens einen ersten Anschlag (13) und/oder einen zweiten Anschlag (14) derart ausgebildet und am Träger (10) angeordnet, sodass eine Bewegungsmöglichkeit des Wischelements (2) durch den ersten Anschlag (13) und/oder den zweiten Anschlag (14) begrenzt ist.

8. Wischeinrichtung (1) nach Anspruch 7, aufweisend Vorspannmittel (12), welche derart ausgebildet und am Träger (10) und/oder an dem Wischelement (2) angeordnet sind, sodass die Haltekraft mittels der Vorspannmittel (12) zwischen Wischelement (2) und dem ersten Anschlag (13) und/oder zwischen Wischelement (2) und dem zweiten Anschlag (14) bereitstellbar ist.

9. Wischeinrichtung (1) nach Anspruch 8, wobei die Vorspannmittel (12) mindestens ein zwischen Träger (10) und Wischelement (2) wirksam angeordnetes Federelement aufweisen, insbesondere wobei das Wischelement (2) und/oder ein mit dem Wischelement (2) kinematisch assoziiertes weiteres Element flexibel ausgeführt ist/sind.

10. Wischeinrichtung (1) nach Anspruch 7, aufweisend Haltemittel (15, 16), wobei die Haltemittel (15, 16) derart ausgebildet und am Träger (10) und/oder an dem Wischelement (2) angeordnet sind, sodass die Haltekraft wirksam zwischen Wischelement (2) und dem ersten Anschlag (13) und/oder dem zweiten Anschlag (14) durch die Haltemittel (15, 16) bereitstellbar ist.

11. Wischeinrichtung (1) nach Anspruch 10, wobei die Haltemittel (15, 16) mindestens einen am Träger (10) oder am Wischelement (2) angeordneten Magneten (7, 17) und/oder ein damit zusammenwirkendes Federmittel (18) aufweisen, insbesondere wobei das Wischelement (2) und/oder ein mit dem Wischelement (2) kinematisch assoziiertes weiteres Element steif ausgeführt ist/sind.

12. System für eine Frontpartie (38) eines Fahrzeugs (30), aufweisend
- eine Windschutzscheibe (40) mit einem Hauptsichtfeld (41), um einer Person eine Sicht aus einem Innenraum (43) des Fahrzeugs (30) zu ermöglichen, und mit einem Sensorsichtfeld (42), um einem optischen Sensor einen Strahlungsgang durch die Windscheibe (40) zu ermöglichen,
- eine Scheibenwischeinrichtung (50) mit mindestens einem Wischerblatt (51) zum Reinigen des Hauptsichtfelds (41) der Windschutzscheibe (40), und
- eine weitere Wischeinrichtung (1) zum Reinigen des Sensorsichtfelds (42) gemäß einem der Ansprüche 1 bis 11.

13. System nach Anspruch 12, wobei das Wischelement (2) derart an dem Träger (10) gelagert ist, und wobei der Träger (10) derart an der Windschutzscheibe (40) oder in unmittelbarer Nähe der Windschutzscheibe (40) am Fahrzeug (30) befestigt ist, sodass das Wischelement (2) durch eine Wischbewegung des Wischerblatts (51) aus der stabilen Halteposition (3, 4) bringbar ist, insbesondere wobei das Wischelement (2) und/oder das Wischerblatt (51) derart flexible und/oder Stoß-dämpfende Kontaktmittel aufweisen oder damit ausgebildet sind, sodass ein Stoß zwischen Wischerblatt (51) und dem Wischelement (2) zur Überwindung der Haltekraft dahingehend abgefedert und/oder gedämpft werden kann, sodass eine Bewegung des Wischelements (2) bezüglich eines Stattfindens des Stoßes zeitlich verzögert ausübbar ist.

14. System nach einem der Ansprüche 12 bis 13, aufweisend einen optischen Sensor ausgebildet zur Anordnung an der Windschutzscheibe (40) oder an einem zur Windschutzscheibe (40) benachbarten Bereich in einem Innenraum des Fahrzeugs (30), wobei der optische Sensor zur Detektion durch die Windschutzscheibe (40) hindurch ausgerichtet ist, insbesondere wobei der optische Sensor als Kamera (39) ausgebildet und direkt an der Windschutzscheibe (40) angeordnet ist.

15. Fahrzeug (30) aufweisend einen Wagenkasten (36), einen durch den Wagenkasten (36) gebildeten Innenraum (43), und ein an einer Frontpartie (38) des Fahrzeugs (30) vorgesehenes System gemäß einem der Ansprüche 12 bis 14, wobei der Innenraum (43) einen Fensterbereich mit der Windschutzscheibe (40) umfasst.

## Claims

1. Wiper arrangement (1) for cleaning a sensor field of vision (42) on a windscreen (40) for a front portion (38) of a vehicle (30), comprising
- a wiping element (2) and a carrier (10),
- wherein the carrier (10) is configured and/or provided with corresponding attachment means to be attached to the windscreen (40) or in direct proximity to the windscreen (40),
**characterised in that**
- the wiping element (2) is supported such movably on the carrier (10) that the wiping element (2) can take at least one stable holding position (3, 4) relative to the carrier (10), and at least by overcoming a defined holding force, is bringable out of the stable holding position (3, 4), and
- wherein the wiping element (2) is supported on the carrier (10) such and is configured such that, in case of intended attachment of the carrier (10) on the windscreen (40) or in direct proximity of the windscreen (40),
the wiping element (2) is bringable out of the stable holding position (3, 4) by a wiping movement of a wiper blade (51) of a windscreen wiper arrangement (50) of the windscreen (40), and thereby be drivable and/or actuatable by the wiping movement of the wiper blade (51).

2. Wiper arrangement (1) according to claim 1, wherein the wiper arrangement (1) comprises no separate drive means and/or no electrical-energy-consuming drive means for actuating the wiping element (2).

3. Wiper arrangement (1) according to claim 1 or 2, wherein the wiping element (2) is supported such movably on the carrier (10) that the wiping element (2), and particularly a further element kinematically associated with the wiping element (2), is arranged in a holding position (3, 4), particularly completely, outside the sensor field of vision (42).

4. Wiper arrangement (1) according to one of the preceding claims, wherein the wiping element (2) is supported such movably on the carrier (10) that relative to the carrier (10) the wiping element (2) can take at least one stable first holding position (3) and one stable second holding position (4), wherein the wiping element (2) is bringable at least by overcoming a defined first holding force out of the first holding position (3), and by overcoming a defined second holding force out the second holding position (4).

5. Wiper arrangement (1) according to claim 4, wherein the wiping element (2) is supported such movably on the carrier (10) that the wiping element (2) always strives to take either the first holding position (3) or the second holding position (4), and particularly, wherein the wiping element (2) always strives to get from an unstable mid-position either into the first holding position (3) or into the second holding position (4).

6. Wiper arrangement (1) according to claim 4 or 5, wherein the carrier (10) comprises a rotational support (11) by means of which the wiping element (2) is pivotably, particularly between the first holding position (3) and the second holding position (4), supported on the carrier (10).

7. Wiper arrangement (1) according to one of the preceding claims, comprising at least one first stopper (13) and/or one second stopper (14) configured and arranged on the carrier (10) such that a possibility of movement of the wiping element (2) is limited by the first stopper (13) and/or the second stopper (14).

8. Wiper arrangement (1) according to claim 7, comprising pretensioning means (12) which are configured such and arranged on the carrier (10) and/or on the wiping element (2) such that the holding force by means of the pretensioning means (12) between wiping element (2) and the first stopper (13) and/or between wiping element (2) and the second stopper (14) is providable.

9. Wiper arrangement (1) according to claim 8, wherein the pretensioning means (12) comprise at least one spring element operatively arranged between carrier (10) and wiping element (2), particularly wherein the wiping element (2) and/or a further element kinematically associated with the wiping element (2) is/are flexibly configured.

10. Wiper arrangement (1) according to claim 7, comprising holding means (15, 16), wherein the holding means (15, 16) are configured such and arranged on the carrier (10) and/or on the wiping element (2) such that the holding force is effectively providable by the holding means (15, 16) between wiping element (2) and the first stopper (13) and/orthe second stopper (14).

11. Wiper arrangement (1) according to claim 10, wherein the holding means (15, 16) comprise at least one magnet (7, 17) arranged on the carrier (10) or on the wiping element (2) and/or a therewith interacting spring means, particularly wherein the wiping element (2) and/or a further element kinematically associated with the wiping element (2) is/are rigidly configured.

12. System for a front portion (38) of a vehicle (30) comprising
- a windscreen (40) with a main field of vision (41) for providing a person a view from an interior space (43) of the vehicle (30), and with a sensor field of vision (42) for providing an optical sensor a radiation path through the windscreen (40),
- a windscreen wiper arrangement (50) with at least one wiper blade (51) for cleaning the main field of vision (41) of the windscreen (40), and
- a further wiper arrangement (1) for cleaning the sensor field of vision (42) according to one of the claims 1 to 11.

13. System according to claim 12, wherein the wiping element (2) is supported on the carrier (10) such, and wherein the carrier (10) is attached to the windscreen (40) or in direct proximity of the windscreen (40) to the vehicle (30) such that the wiping element (2) is bringable out of the stable holding position (3, 4) by a wiping movement of the wiper blade (51), particularly wherein the wiping element (2) and/or the wiper blade (51) comprise or are configured with such flexible and/or shock-absorbing contact means that a shock between wiper blade (51) and the wiping element (2) for overcoming the holding force can be absorbed and/or damped accordingly such that a movement of the wiping element (2) with respect to the occurrence of the shock is exertable delayed in time.

14. System according to one of the claims 12 to 13, comprising an optical sensor configured for arrangement on the windscreen (40) or on a region adjacent to the windscreen (40) in an interior space of the vehicle (30), wherein the optical sensor is oriented for detection through the windscreen (40), particularly wherein the optical sensor is configured as camera (39) and is arranged directly on the windscreen (40).

15. Vehicle (30) comprising a vehicle body (36), an interior space (43) formed by the vehicle body (36), and a system according to one of claims 12 to 14 intended on a front portion (38) of the vehicle (30), wherein the interior space (43) comprises a window area with the windscreen (40).

## Revendications

1. Dispositif d'essuyage (1) permettant de nettoyer un champ de vision de capteur (42) sur un pare-brise (40) pour une partie avant (38) d'un véhicule (30), comportant
- un élément d'essuyage (2) et un support (10),
- dans lequel le support (10) est conçu et/ou est pourvu de moyens de fixation correspondants pour être fixé au pare-brise (40) ou à proximité immédiate du pare-brise (40),
- **caractérisé en ce que** l'élément d'essuyage (2) est monté mobile sur le support (10) de telle sorte que l'élément d'essuyage (2) peut prendre au moins une position de maintien (3, 4) stable par rapport au support (10) et peut être amené hors de la position de maintien (3, 4) stable au moins par dépassement d'une force de maintien définie, et
- dans lequel l'élément d'essuyage (2) est monté sur le support (10) de telle sorte et est conçu de telle sorte que, lors de la fixation conforme à sa destination du support (10) sur le pare-brise (40) ou à proximité immédiate du pare-brise (40), l'élément d'essuyage (2) peut être amené hors de la position de maintien (3, 4) stable par un mouvement d'essuyage d'un balai d'essuie-glace (51) d'un dispositif d'essuie-glace (50) du pare-brise (40) et peut donc être entraîné et/ou actionné par le mouvement d'essuyage du balai d'essuie-glace (51).

2. Dispositif d'essuyage (1) selon la revendication 1, dans lequel le dispositif d'essuyage (1) ne comporte aucun moyen d'entraînement indépendant et/ou aucun moyen d'entraînement consommant de l'énergie électrique pour actionner l'élément d'essuyage (2).

3. Dispositif d'essuyage (1) selon la revendication 1 ou 2, dans lequel l'élément d'essuyage (2) est monté mobile sur le support (10) de telle sorte que l'élément d'essuyage (2), et en particulier un autre élément associé cinématiquement à l'élément d'essuyage (2), est disposé dans une position de maintien (3, 4), en particulier complètement, en dehors du champ de vision de capteur (42).

4. Dispositif d'essuyage (1) selon l'une quelconque des revendications précédentes, dans lequel l'élément d'essuyage (2) est monté mobile sur le support (10) de telle sorte que l'élément d'essuyage (2) peut prendre au moins une première position de maintien (3) stable et une seconde position de maintien (4) stable par rapport au support (10), dans lequel l'élément d'essuyage (2) peut être amené hors de la première position de maintien (3) au moins par dépassement d'une première force de maintien définie et hors de la seconde position de maintien (4) par dépassement d'une seconde force de maintien définie.

5. Dispositif d'essuyage (1) selon la revendication 4, dans lequel l'élément d'essuyage (2) est monté mobile sur le support (10) de telle sorte que l'élément d'essuyage (2) s'efforce toujours de prendre la première position de maintien (3) ou la seconde position de maintien (4), et en particulier dans lequel l'élément d'essuyage (2) s'efforce toujours de passer d'une position centrale instable vers la première position de maintien (3) ou vers la seconde position de maintien (4).

6. Dispositif d'essuyage (1) selon la revendication 4 ou 5, dans lequel le support (10) comporte un palier de rotation (11) au moyen duquel l'élément d'essuyage (2) est monté sur le support (10) de manière à pouvoir pivoter, en particulier entre la première position de maintien (3) et la seconde position de maintien (4).

7. Dispositif d'essuyage (1) selon l'une quelconque des revendications précédentes, comportant au moins une première butée (13) et/ou une seconde butée (14) conçues et disposées sur le support (10) de telle sorte qu'une possibilité de mouvement de l'élément d'essuyage (2) est limitée par la première butée (13) et/ou par la seconde butée (14).

8. Dispositif d'essuyage (1) selon la revendication 7, comportant des moyens de précontrainte (12), lesquels sont conçus et disposés sur le support (10) et/ou sur l'élément d'essuyage (2) de telle sorte que la force de maintien peut être fournie au moyen des moyens de précontrainte (12) entre l'élément d'essuyage (2) et la première butée (13) et/ou entre l'élément d'essuyage (2) et la seconde butée (14).

9. Dispositif d'essuyage (1) selon la revendication 8, dans lequel les moyens de précontrainte (12) comportent au moins un élément ressort disposé de manière efficace entre le support (10) et l'élément d'essuyage (2), en particulier dans lequel l'élément d'essuyage (2) et/ou un autre élément associé cinématiquement à l'élément d'essuyage (2) sont flexibles.

10. Dispositif d'essuyage (1) selon la revendication 7, comportant des moyens de maintien (15, 16), dans lequel les moyens de maintien (15, 16) sont conçus et disposés sur le support (10) et/ou sur l'élément d'essuyage (2) de telle sorte que la force de maintien peut être fournie de manière efficace entre l'élément d'essuyage (2) et la première butée (13) et/ou la seconde butée (14) par les moyens de maintien (15, 16).

11. Dispositif d'essuyage (1) selon la revendication 10, dans lequel les moyens de maintien (15, 16) comportent au moins un aimant (7, 17) disposé sur le support (10) ou sur l'élément d'essuyage (2) et/ou un moyen de ressort (18) coopérant avec celui-ci, en particulier dans lequel l'élément d'essuyage (2) et/ou un autre élément associé cinématiquement à l'élément d'essuyage (2) sont rigides.

12. Système pour une partie avant (38) d'un véhicule (30), comportant
- un pare-brise (40) comportant un champ de vision principal (41) pour permettre à une personne de voir depuis un espace intérieur (43) du véhicule (30), et comportant un champ de vision de capteur (42) pour permettre à un capteur optique d'obtenir un chemin de rayonnement à travers le pare-brise (40),
- un dispositif d'essuie-glace (50) comportant au moins un balai d'essuie-glace (51) pour nettoyer le champ de vision principal (41) du pare-brise (40), et
- un autre dispositif d'essuyage (1) pour nettoyer le champ de vision de capteur (42) selon l'une quelconque des revendications 1 à 11.

13. Système selon la revendication 12, dans lequel l'élément d'essuyage (2) est monté sur le support (10) de telle sorte, et dans lequel le support (10) est fixé au pare-brise (40) ou au véhicule (30) à proximité immédiate du pare-brise (40) de telle sorte que l'élément d'essuyage (2) peut être amené hors de la position de maintien (3, 4) stable par un mouvement d'essuyage du balai d'essuie-glace (51), en particulier dans lequel l'élément d'essuyage (2) et/ou le balai d'essuie-glace (51) comportent des moyens de contact flexibles et/ou absorbant les chocs, ou sont conçus avec ceux-ci, de telle sorte qu'un choc entre le balai d'essuie-glace (51) et l'élément d'essuyage (2) peut être atténué et/ou amorti afin de dépasser la force de maintien, de telle sorte qu'un mouvement de l'élément d'essuyage (2) peut être exercé avec un retard temporel par rapport à l'apparition du choc.

14. Système selon l'une des revendications 12 à 13, comportant un capteur optique conçu pour être disposé sur le pare-brise (40) ou sur une zone adjacente au pare-brise (40) dans un espace intérieur du véhicule (30), dans lequel le capteur optique est orienté pour la détection à travers le pare-brise (40), en particulier dans lequel le capteur optique est conçu sous la forme d'une caméra (39) et est disposé directement sur le pare-brise (40).

15. Véhicule (30) comportant une carrosserie (36), un espace intérieur (43) formé par la carrosserie (36), et un système selon l'une quelconque des revendications 12 à 14 situé sur une partie avant (38) du véhicule (30), dans lequel l'espace intérieur (43) comprend une zone de fenêtre comportant le pare-brise (40).
